# EUROPEAN PATENT APPLICATION

(11) **EP 4 737 943 A1**
(43) Date of publication of application: **06.05.2026**
(21) Application number: 25211233.9
(22) Date of filing: 27.10.2025
(51) Int. Cl.: G01S 7/48, G01S 7/481, G01S 7/484, G01S 7/4861, G01S 7/487, G01S 7/497, G01S 7/499, G01S 17/18

(54) **POLARIZATION-BASED CROSSTALK MITIGATION IN OPTICAL RANGING SENSORS**

(30) Priority: 05.11.2024 US 202418937525
(71) Applicant: STMicroelectronics International N.V., 1228 Plan-les-Ouates, Geneva (CH)
(72) Inventor: MCLEOD, Stuart, EDINBURGH, EH128QF (GB); DOWNING, James Peter Drummond, DOUNE, FK16 6DE (GB)
(74) Representative: Cabinet Beaumont

(57) **Abstract**

An example optical ranging sensor, a method for determining a proximity of a target at an optical ranging sensor, and a mobile electronic device comprising an optical ranging sensor are provided. The example optical ranging sensor includes an optical transmitter, an optical receiver, and a controller. The optical transmitter configured to generate a first signal having a first polarization state and a second signal having a second polarization state. The optical receiver configured to generate a first feedback signal resulting from one or more reflections of the first signal, and a second feedback signal resulting from one or more reflections of the second signal. The controller configured to generate a target feedback signal based on a comparison of the first feedback signal and the second feedback signal and determine a proximity of a target based on the target feedback signal.

## Description

### TECHNOLOGICAL FIELD

Embodiments of the present disclosure relate generally to optical ranging sensors, and more particularly, to mitigating inconsistencies due to crosstalk at an optical ranging sensor.

### BACKGROUND

Optical ranging sensors may include an optical transmitter and an optical receiver. During operation, the optical ranging sensor transmits light toward a target object through one or more optically transmissive components, such as a coverglass. The transmitted light reflects off the target object and is received by the light receiver on the optical ranging sensor. The received light is used to extract useful information like the distance of the target object, the motion of the target object, the speed of the target object, surface properties of the target object, and so on. Light received at the optical receiver from unwanted sources, such as crosstalk light reflecting off a coverglass, may adversely affect the accuracy of an optical ranging sensor.

Applicant has identified many technical challenges and difficulties associated with mitigating crosstalk at an optical ranging sensor. Through applied effort, ingenuity, and innovation, Applicant has solved problems related to crosstalk at an optical ranging sensor by developing solutions embodied in the present disclosure, which are described in detail below.

### BRIEF SUMMARY

Various embodiments are directed to an example optical ranging sensor, a method for determining a proximity of a target at an optical ranging sensor, and a mobile electronic device comprising an optical ranging sensor.

An embodiment provides an optical ranging sensor comprising:
an optical transmitter configured to generate at least one signal having a polarization state;
an optical receiver configured to generate:
   at least one feedback signal resulting from one or more reflections of said signal having a polarization state; and
a controller configured to:
   generate a target feedback signal based at least on said feedback signal; and
   determine a proximity of a target based on the target feedback signal.

An embodiment provides a method for determining a proximity of a target at an optical ranging sensor, the method comprising:
causing an optical transmitter to transmit at least one signal having a polarization state;
receiving from an optical receiver at least one feedback signal resulting from one or more reflections of said signal having a polarization state;
generating a target feedback signal based at least on said feedback signal; and
determining the proximity of the target based on the target feedback signal.

An embodiment provides a mobile electronic device comprising:
a housing;
a display screen attached to the housing, the display screen comprising:
   a first side configured to emit transmitted light via a plurality of display pixels into an external environment; and
   an optical ranging sensor according to claim 1, disposed within the housing, opposite the first side of the display screen.

In some embodiments:
said one signal having a polarization state is a first signal having a first polarization state of a plurality of signals; and
the optical transmitter generates and/or transmits a second signal having a second polarization state.

In some embodiments:
said one feedback signal is a first feedback signal of a plurality of feedback signals; and
said target feedback signal is generated based on a comparison of the first feedback signal and the second feedback signal.

An example optical ranging sensor is provided. The example optical ranging sensor includes an optical transmitter, an optical receiver, and a controller. The optical transmitter configured to generate a first signal having a first polarization state and a second signal having a second polarization state. The optical receiver configured to generate a first feedback signal resulting from one or more reflections of the first signal, and a second feedback signal resulting from one or more reflections of the second signal. The controller configured to generate a target feedback signal based on a comparison of the first feedback signal and the second feedback signal; and determine a proximity of a target based on the target feedback signal.

In some embodiments, the target feedback signal corresponds to a portion of the first signal reflected off the target.

In some embodiments, to generate the target feedback signal, the controller is further configured to: generate a first histogram corresponding to the first feedback signal; generate a second histogram corresponding to the second feedback signal; and generate the target feedback signal based on a comparison of the first histogram and the second histogram.

In some embodiments, to generate the target feedback signal, the controller is further configured to: determine a crosstalk difference signal by performing a difference between the first feedback signal and the second feedback signal; and apply a crosstalk function to determine a total crosstalk signal, wherein the crosstalk function relates the crosstalk difference to the total crosstalk signal.

In some embodiments, the crosstalk function is determined during a calibration period.

In some embodiments, the proximity of the target is based on a time-of-flight associated with the target feedback signal.

In some embodiments, the first polarization state is orthogonal to the second polarization state.

In some embodiments, the optical transmitter is configured to alternate between generating the first signal having the first polarization state and the second signal having the second polarization state.

In some embodiments, the optical transmitter alternates between generating the first signal having the first polarization state and the second signal having the second polarization state after each integration period.

In some embodiments, the optical transmitter is a vertical-cavity surface-emitting laser.

In some embodiments, the vertical-cavity surface-emitting laser is configured to generate the first signal having the first polarization state and the second signal having the second polarization state based on a polarization control signal transmitted by the controller.

An example method for determining a proximity of a target at an optical ranging sensor is further provided. The example method comprising: causing an optical transmitter to transmit a first signal having a first polarization state; receiving from an optical receiver a first feedback signal resulting from one or more reflections of the first signal; causing the optical transmitter to transmit a second signal having a second polarization state; receiving from the optical receiver a second feedback signal resulting from one or more reflections of the second signal; generating a target feedback signal based on a comparison of the first feedback signal and the second feedback signal; and determining the proximity of the target based on the target feedback signal.

In some embodiments, the target feedback signal corresponds to a portion of the first signal reflected off the target.

In some embodiments, generating the target feedback signal further comprises generating a first histogram corresponding to the first feedback signal; generating a second histogram corresponding to the second feedback signal; and generating the target feedback signal based on a comparison of the first histogram and the second histogram.

In some embodiments, generating the target feedback signal further comprises determining a crosstalk difference signal by performing a difference between the first feedback signal and the second feedback signal; and applying a crosstalk function to determine a total crosstalk signal, wherein the crosstalk function relates the crosstalk difference to the total crosstalk signal.

In some embodiments, determining the proximity of the target further comprises determining a time-of-flight associated with the target feedback signal.

In some embodiments, the first polarization state is orthogonal to the second polarization state.

In some embodiments, the method further comprises causing the optical transmitter to alternate between generating the first signal having the first polarization state and the second signal having the second polarization state.

In some embodiments, the optical transmitter alternates between generating the first signal having the first polarization state and the second signal having the second polarization state after each integration period.

An example mobile electronic device is further provided. The example mobile electronic device comprising a housing, a display screen, and an optical ranging sensor. The display screen attached to the housing and the display screen comprising: a first side configured to emit transmitted light via a plurality of display pixels into an external environment. The optical ranging sensor disposed within the housing, opposite the first side of the display screen, the optical ranging sensor comprising an optical transmitter, an optical receiver, and a controller. The optical transmitter configured to generate a first signal having a first polarization state and a second signal having a second polarization state. The optical receiver configured to receive: a first feedback signal resulting from one or more reflections of the first signal; and a second feedback signal resulting from one or more reflections of the second signal. The controller configured to: generate a target feedback signal based on a comparison of the first feedback signal and the second feedback signal; and determine a proximity of a target based on the target feedback signal.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 depicts an example block diagram of an optical ranging sensor in accordance with an example embodiment of the present disclosure.
FIG. 2 illustrates the behavior of different polarization states incident on a transmissive object in accordance with an example embodiment of the present disclosure.
FIG. 3 depicts an example optical ranging sensor configured to transmit optical signals having a first polarization state and a second polarization state at a target object in accordance with an example embodiment of the present disclosure.
FIG. 4 depicts an example method for removing a crosstalk signal from a feedback signal received at an optical ranging sensor in accordance with an example embodiment of the present disclosure.
FIG. 5 depicts an example histogram received at an optical receiver and a reference array of an optical ranging sensor in accordance with an example embodiment of the present disclosure.
FIG. 6 illustrates an example flow chart depicting a method for removing a crosstalk signal from a feedback signal in accordance with an example embodiment of the present disclosure.
FIG. 7 depicts an example mobile electronic device comprising an optical ranging sensor in accordance with an example embodiment of the present disclosure.
FIG. 8 depicts a block diagram of example components of a controller in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with mitigating crosstalk at an optical ranging sensor when determining proximity parameters of a target object. As understood by those of skill in the field to which the present disclosure pertains, there are numerous example scenarios in which a user may benefit from mitigating crosstalk at an optical ranging sensor.

In general, optical ranging sensors (e.g., time-of-flight sensors) have widespread applications across multiple industries due to their ability to measure distances, track objects, detect presence, and/or map environments with high precision. For example, optical ranging sensors may be used in consumer electronics for facial recognition, augmented reality, and enhanced focus of a camera. In robotics and autonomous vehicles, optical ranging sensors may enable obstacle avoidance, improved navigation, and safety through real-time 3D mapping of a surrounding environment. In industrial automation, optical ranging sensors may be used for precise object detection and monitoring.

During operation, the optical ranging sensor transmits light from an optical transmitter toward a target object in an external environment. The transmitted light reflects off the target object and is received by the light receiver on the optical ranging sensor. Based on the time required for the transmitted light to travel to the target object, reflect off the target object, and travel back to the optical ranging sensor, certain physical aspects of the target object may be determined, for example, the distance of the target object, the motion of the target object, the speed of the target object, surface properties of the target object, and so on.

Many optical ranging sensors are positioned behind a coverglass. A coverglass is a transmissive object on or near an optical ranging sensor. A coverglass may provide protection to the internal components of an optical ranging sensor and/or other components of an electronic device. In some embodiments, a coverglass may further be configured to perform optical operations on the transmitted or received light, such as focusing or dispersion.

In addition to receiving reflected light originating from the light source and bouncing off the target, the light receiver on an optical ranging sensor may receive light from unwanted sources, such as light reflected off the coverglass and/or light internally reflected within the coverglass and exiting the coverglass at the light receiver. Such unwanted light is referred to as crosstalk light. Crosstalk light received at the light receiver may make it difficult to detect and analyze the signal reflecting off the target object, particularly in an instance in which the target object is in close proximity to the coverglass. Crosstalk may further cause errors or inconsistencies in distance and proximity determinations as the level of crosstalk may change over time.

Previous examples have sought to overcome inaccuracies due to crosstalk by determining crosstalk during a calibration period and adjusting for the time-of-flight results for crosstalk during operation. However, the level of crosstalk can change over time, due to obstructions on the coverglass (e.g., foreign material, dust, dirt, scratches, etc.), aging of components, and other variables. Various crosstalk monitors outside of the electronic device field of view have been utilized to compensate for crosstalk signals. However, these monitors are placed outside the field of view, increasing the component size, and may suffer additional interference from the target return signal in an instance in which a target object is close to the sensor.

The various example embodiments described herein utilize various techniques to dynamically mitigate crosstalk at an optical ranging sensor. For example, an optical transmitter configured to alternately transmit a first signal having a first polarization state and a second signal having a second polarization state is utilized. In an instance in which light encounters a medium with a new refractive index, the amount of reflection and refraction may depend on the polarization of the incident light. Thus, the crosstalk received at the optical receiver of a ranging sensor changes based on the polarization of the transmitted light. By transmitting signals having different polarization states an optical ranging sensor may be configured to determine the amount of light returning to the optical transmitter attributable to crosstalk.

For example, during operation of an optical ranging sensor, a plurality of light pulses are transmitted toward a target. The received light at the light receiver includes a portion of reflected light reflected by the target, and a portion of crosstalk light reflected by the coverglass and/or other components of the optical ranging sensor.

The crosstalk portion of the received light may be identified and removed by transmitting light having different polarities. For example, a light source with dynamic polarization control may be utilized to alternatively transmit light having a first polarization followed by light having a second polarization. The portion of reflected light off of the target object is assumed to be the same, no matter the light polarization. However, the portion of crosstalk light is different based on the light polarization.

During a calibration period, a crosstalk function may be determined. The crosstalk function relates the difference in crosstalk resulting from two transmitted signals received at the optical receiver to the total crosstalk signal in the combination of the two signals.

For example, a first signal having a first polarization state may be transmitted, and a resulting first feedback signal having a first target feedback portion (corresponding to light reflected off the target) and a first crosstalk portion (corresponding to light received through crosstalk) based on the received reflected first signal may be generated. The first crosstalk portion may be dependent on the first polarization of the first state. Next, a second signal having a second polarization state may be transmitted, and a resulting second feedback signal having a second target feedback portion (corresponding to light reflected off the target) and a second crosstalk portion (corresponding to light received through crosstalk) based on the received reflected second signal may be generated. While the first target feedback portion and the second target feedback portion are assumed to be equal, the first crosstalk portion and the second crosstalk portion are dependent on the polarization of the transmitted light. Thus, based on a comparison of the first feedback signal and the second feedback signal, the portion of the feedback signal attributable to the target (e.g., target feedback signal) may be isolated. Utilizing the target feedback signal alone, accurate determinations of proximity parameters of the target may be determined.

In some embodiments, the target feedback signal may be determined by adding the first feedback signal and second feedback signal to generate a combined feedback signal. The combined feedback signal includes the total crosstalk signal and the target feedback signal (e.g., the target feedback portion added twice). By performing a difference between the first feedback signal and the second feedback signal, the target portion of the feedback signal (equal in both signals) is removed, leaving only a crosstalk difference signal. The crosstalk function may be utilized to determine the total crosstalk signal from the crosstalk difference signal. Once determined, the total crosstalk signal may be removed from the combined feedback signal, leaving only the target feedback signal.

As a result of the herein described example embodiments, the crosstalk components in a feedback signal may be mitigated, improving the overall accuracy of an optical ranging sensor. In addition, the method for compensating for crosstalk in an optical ranging sensor described herein dynamically adjusts for crosstalk. Thus, the optical ranging sensor is resilient to change in crosstalk values over the life of the electronic device. Meaning, changes in the amount of crosstalk due to obstructions on the coverglass and/or aging may be mitigated dynamically, improving the accuracy of the optical ranging sensor over a greater lifetime.

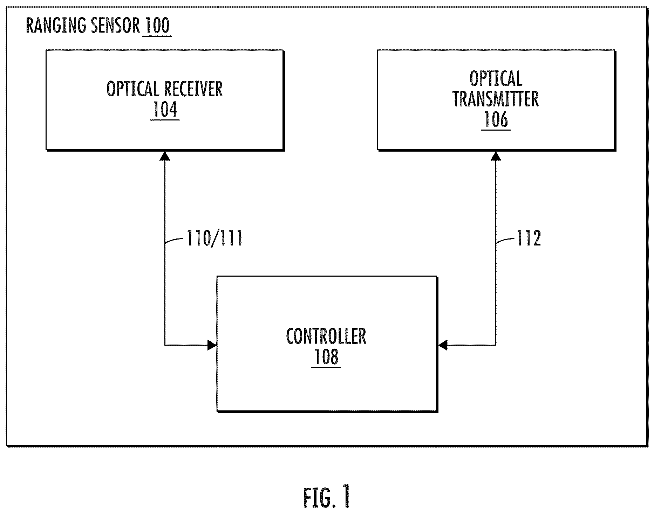

Referring now to FIG. 1, an example optical ranging sensor 100 is provided. As depicted in FIG. 1, the example optical ranging sensor 100 includes an optical receiver 104 and an optical transmitter 106. As further depicted in FIG. 1, the optical transmitter 106 is electrically connected to a controller 108 and configured to receive polarization control signals 112. The optical receiver 104 is also electrically connected to the controller 108 and is configured to transmit first feedback signals 110 and second feedback signals 111 to the controller 108.

As depicted in FIG. 1, an example optical ranging sensor 100 is provided. An optical ranging sensor 100 is any sensing device configured to generate an optical signal and determine a physical characteristic of a target object based on the elapsed time between transmission of the optical signal and reception of a reflected signal. In some embodiments, the optical ranging sensor 100 may comprise a time-of-flight sensor.

In general, a time-of-flight second operates by measuring the time it takes for an optical signal, usually emitted as a laser or infrared pulse, to travel to a target object and reflect back to the sensor. The time-of-flight sensor calculates the distance to the object based on the speed of light and the time delay between the emission and detection of the optical signal. The time-of-flight of the optical signal may be used to measure a distance to the target object, track the motion of the target object, determine a speed of the target object, detect presence of a target object, determine material properties of a target object, and/or map target objects in an environment with high precision.

As further depicted in FIG. 1, the example optical ranging sensor 100 includes an optical transmitter 106. An optical transmitter 106 is any device, bulb, semiconductor, diode, laser, or other photon-emitting structure configured to generate an optical signal. An optical transmitter 106 may comprise any light source, such as a laser diode, a light-emitting diode, bulb, semiconductor device, or other photon-emitting structure. In some embodiments, an optical transmitter 106 may comprise a semiconductor laser diode, for example, a vertical-cavity surface-emitting laser (VCSEL) and/or an edge emitting laser diode. In general, an optical transmitter 106 may output a coherent light beam upon receipt of a current.

The optical transmitter 106 is further configured to generate optical signals having different polarization states. In general, optical signals comprise a plurality of polarization states. An optical signal may be polarized by passing an optical signal through a polarization filter that aligns the electromagnetic wave in a single plane. Weak polarization may occur in an instance in which the electromagnetic wave comprising the optical signal oscillates in multiple planes, but primarily oscillates in a single plane (> 70% of oscillations occur in the polarized plane). Strong polarization may occur in an instance in which the electromagnetic wave comprising the optical signal strongly oscillates in a single plane (e.g., > 90% of oscillations occur in the polarized plane).

The optical transmitter 106 of FIG. 1 is configured to generate optical signals in at least two polarization states. For example, a first signal primarily oscillating in a first polarization plane and a second signal primarily oscillating in a second polarization plane, wherein the first polarization plane and the second polarization plane are different. In some embodiments, the first polarization plane and the second polarization plane may be orthogonal (e.g., perpendicular).

In some embodiments, the optical transmitter 106 may comprise a plurality of optical sources, each configured to generate an optical signal having a different polarization state. In some embodiments, the optical transmitter 106 may comprise a single optical source with a plurality of optical filters that may be interchangeably used to generate an optical signal with a different polarization state.

In some embodiments, the optical transmitter 106 may alternate the polarization state of the generated optical signal. For example, the optical transmitter 106 may generate a first optical signal having a first polarization state during a first integration state, and then switch to a second polarization state to generate the second optical signal during the second integration state. Thus, the resulting feedback signals are in close time proximity.

In some embodiments, the optical transmitter 106 may comprise a VCSEL with controllable polarization. A VCSEL with controllable polarization may comprise a plurality of light output apertures, each with a different grating configured to generate an optical signal polarized in alignment with the grating direction. For example, the VCSEL may comprise a portion of the light output apertures with a vertical grating and a portion of the light output apertures with a horizontal grating. The VCSEL with controllable polarization may further be configured to selectively enable the light output apertures comprising a vertical grating and the light output apertures comprising a horizontal grating based on a polarization control signal (e.g., polarization control signal 112). Thus, an optical signal having a first polarization state may be generated in an instance in which the light output apertures comprising a vertical grating are enabled, and an optical signal having a second polarization state may be generated in an instance in which the light output apertures comprising a horizontal grating are enabled.

As further depicted in FIG. 1, the optical transmitter 106 is configured to receive a polarization control signal 112. A polarization control signal 112 is any signal generated by the controller 108 to control the polarization of the optical signal of the optical transmitter 106. In some embodiments, the polarization control signal 112 may comprise multiple control lines, for example, the polarization control signal 112 may comprise a first control line configured to activate a first optical transmitter 106 or portion of the optical transmitter 106 when asserted, and a second control line configured to activate a second optical transmitter 106 or second portion of the optical transmitter 106 when asserted. The first optical transmitter 106 or portion of the optical transmitter 106 configured to generate an output signal exhibiting a first polarization state, and the second optical transmitter 106 or portion of the optical transmitter 106 configured to generate an output signal exhibiting a second polarization state. In some embodiments, the polarization control signal 112 may include a digital code indicating the polarization state of the output signal.

As further depicted in FIG. 1, the example optical ranging sensor 100 includes an optical receiver 104. An optical receiver 104 is any set of one or more photodiodes, integrated circuits, devices, sensors, light sensing diodes, or other structures that produce an electric signal as a result of light received at the optical receiver 104. For example, the electric signal output by the optical receiver 104 may increase as the number of photons that strike the optical receiver 104 per second increases. In such an embodiment, the electric current output from the optical receiver 104 may be used to determine the intensity or amplitude of the optical radiation striking the optical receiver 104. In some embodiments, the optical receiver 104 may be a light sensitive semiconductor diode that creates an electron-hole pair at the p-n junction when a photon of sufficient energy strikes the optical receiver 104. In some embodiments, the optical receiver may comprise one or more single-photon avalanche diodes (SPADs) configured to generate an avalanche current when one or more photons strike the optical receiver 104.

The optical ranging sensor 100 may be configured to generate histograms based on the reflected signal received at the optical receiver 104.

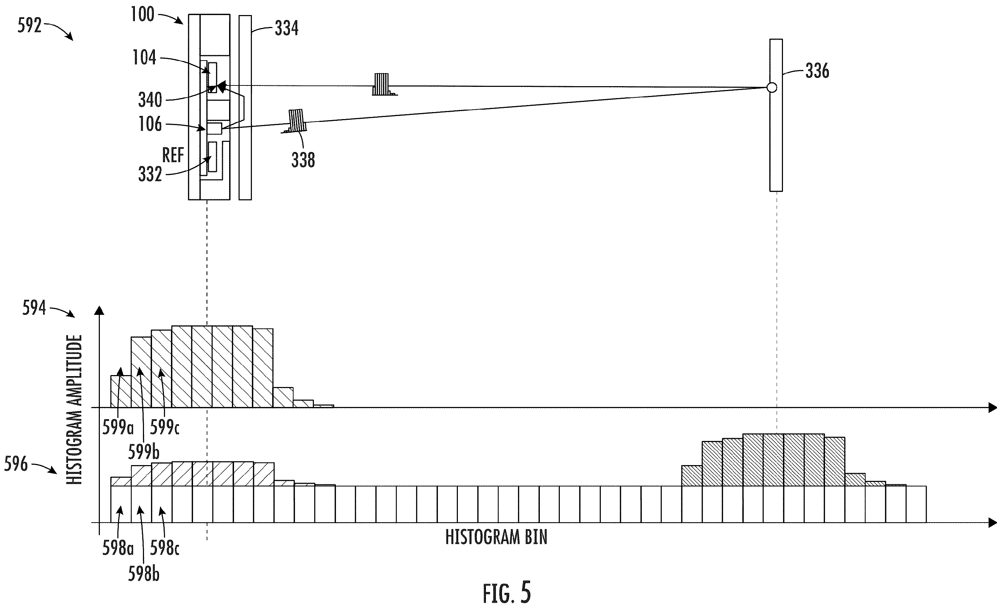

Referring to FIG. 5, an example process 592 for generating a feedback signal histogram 596, and a reference signal histogram 594, based on a reflected signal 340 received at an optical ranging sensor 100, is provided. During operation, the optical transmitter 106 may transmit an optical pulse (e.g., optical signal 338) into an external environment. The optical receiver 104 may collect data related to the reflected signal 340 received at the optical receiver 104 based on the elapsed time since the optical pulse was transmitted. For example, a first bin 598a of the feedback signal histogram 596 may capture the light received at the optical receiver 104 during the first bin time period after the optical pulse was transmitted; a second bin 598b of the feedback signal histogram 596 may capture the light received at the optical receiver 104 during the second bin time period after the optical pulse was transmitted; the third bin 598c of the feedback signal histogram 596 may capture the light received at the optical receiver 104 during the third bin time period after the optical pulse was transmitted; and so on. In some embodiments, the bin time period may be at or around 250 picoseconds.

Similarly, the reference array 332 may be positioned to receive a portion of the optical pulse at the time of transmission. The reference array 332 may be configured to generate a reference signal histogram 594 as a baseline in determining physical characteristics of the target object 336. FIG. 5 depicts an example reference signal histogram. As depicted in FIG. 5, the first bin 599a of the reference signal histogram 594 may capture the light received at the reference array 332 during the first bin time period after the optical pulse is transmitted; a second bin 599b of the reference signal histogram 594 may capture the light received at the reference array 332 during the second bin time period after the optical pulse is transmitted; the third bin 599c of the reference signal histogram 594 may capture the light received at the reference array 332 during the third bin time period after the optical pulse is transmitted; and so on.

Optical pulses are periodically transmitted and the reflected signal 340 accumulated in bins (e.g., bins 598a, 598b, 598c) over an integration time period. For example, an integration time period may include hundreds of thousands of pulses and last for tens of milliseconds. During the integration time period, counts in each of the bins of the histogram are accumulated. The counts accumulated in the bin represent the amount of light received at the optical receiver 104 or the reference array 332 during the time period corresponding to the bin. Thus, at the end of an integration period, data values in the histogram (e.g., peaks) may indicate one or more times at which reflections of the optical signal were received. Such data values in the histogram may be used to determine physical characteristics of target objects in an external environment.

Returning again to FIG. 1, the optical receiver 104 is configured to generate a first feedback signal 110 and a second feedback signal 111. The feedback signals (e.g., first feedback signal 110/second feedback signal 111) generated by an optical receiver 104 correspond to the amount of light received at the optical receiver 104 during a given time period. In some embodiments, the feedback signals may correspond to one or more bins in a histogram generated at an optical receiver 104.

Because the feedback signals are associated with the reflected signal received at the optical receiver 104, the feedback signals include at least a target feedback portion and a crosstalk portion. The target feedback portion corresponds to the portion of the transmitted optical signal that reflects off a target object and returns to the optical receiver 104. The crosstalk portion corresponds to light received from crosstalk sources. Crosstalk sources may include light that traveled directly from the optical transmitter 106 to the optical receiver 104, perhaps, via reflections at and through a cover glass or optical component. The crosstalk portion of the feedback signals may result in inaccuracies when determining physical attributes of the target object.

As depicted in FIG. 1, the feedback signals include a first feedback signal 110 and a second feedback signal 111. The first feedback signal 110 corresponds to the reflected signal received in response to transmission of the first optical signal having a first polarization state. The second feedback signal 111 corresponds to the reflected signal received in response to transmission of the second optical signal having a second polarization state. In some embodiments, the first feedback signal 110 may be collected after a first integration period, and the second feedback signal 111 collected after a second integration period. In some embodiments, the optical ranging sensor 100 may alternate the polarization state of the optical signal after each integration period, thus, the first feedback signal 110 and second feedback signal 111 are generated after alternating integration periods.

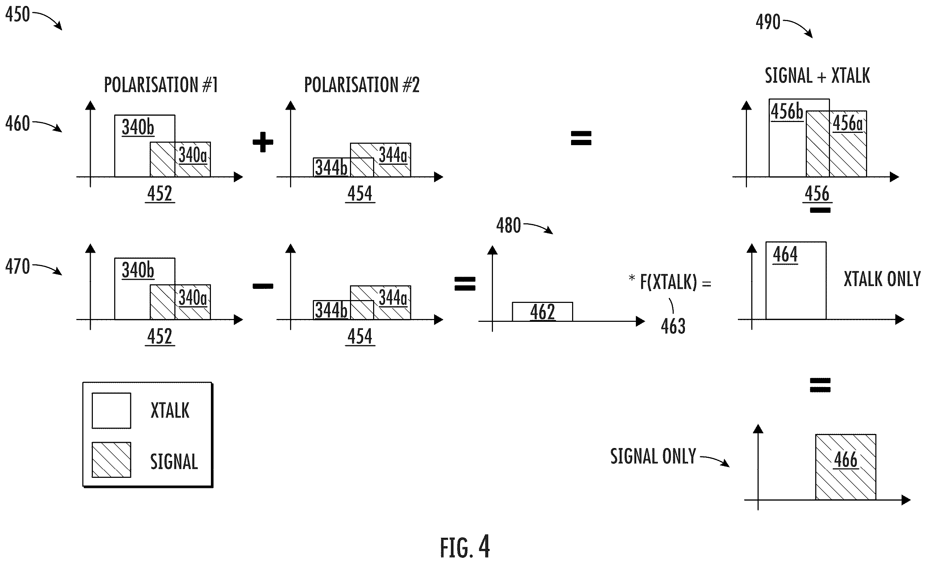

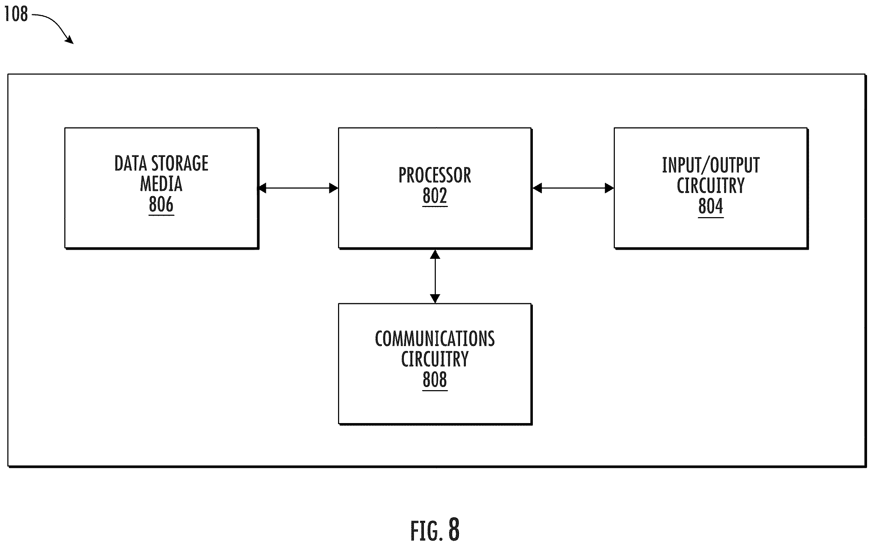

As further depicted in FIG. 1, the example optical ranging sensor 100 includes a controller 108. A controller 108 comprises any processing device configured to receive feedback signals (e.g., first feedback signal 110, second feedback signal 111) from an optical receiver 104 and determine a physical characteristic of a target object based on the feedback signals. The controller 108 is further configured to mitigate affects of crosstalk in a feedback signal by comparing the first feedback signal 110 with the second feedback signal 111. In addition, the controller 108 is configured to generate polarization control signals 112 to coordinate the polarization of the optical signal generated by the optical transmitter 106. For example, the controller 108 may alternate generation of a first signal having a first polarization state with a second signal having a second polarization state. A process for mitigating the affects of crosstalk in a feedback signal are further described in relation to FIG. 4 - FIG. 5. A block diagram depicting an example architecture of a controller 108 is further described in relation to FIG. 8.

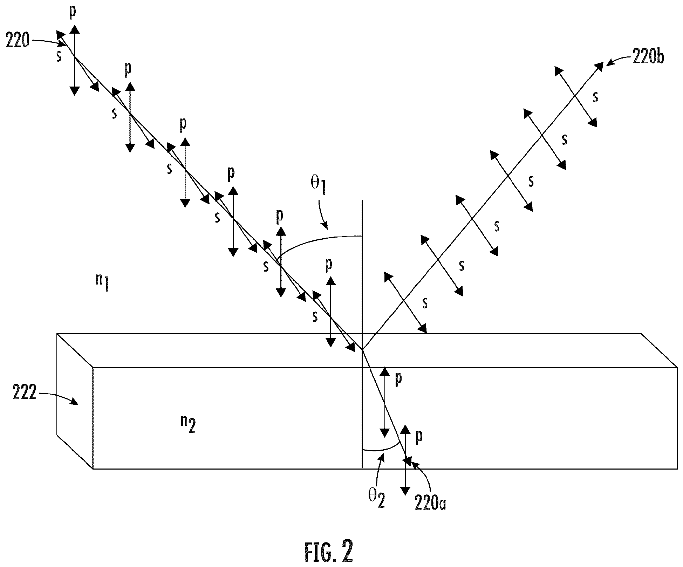

Referring now to FIG. 2, the behavior of an optical signal 220 comprising at least two different polarization states (s) and (p) when encountering a transmissive object 222, is depicted. As depicted in FIG. 2, the magnitude of light transmitted through (e.g., transmitted light 220a) a transmissive object 222 and the magnitude of light reflected off (e.g., reflected light 220b) a transmissive object 222 may depend on the polarization state of the incident light (e.g., optical signal 220). For example, as depicted in FIG. 2, a greater portion of the optical signal 220 (e.g., transmitted light 220a) associated with a first polarization state (p) is transmitted through the transmissive object 222, while a greater portion of the optical signal 220 (e.g., reflected light 220b) associated with a second polarization state (s) is reflected off the transmissive object 222.

Such an optical property depicted in FIG. 2 may enable the detection of crosstalk signals at an optical ranging sensor (e.g., optical ranging sensor 100). For example, in an instance in which a first optical signal having a first polarization state encounters a transmissive object 222 (e.g., lens, coverglass, etc.) a first portion of the first optical signal is reflected by the transmissive object 222 and may reach the optical receiver as crosstalk. In an instance in which a second optical signal having a second polarization state encounters the transmissive object 222 (e.g., lens, coverglass, etc.) a second portion of the second optical signal is reflected by the transmissive object 222 and may also reach the optical receiver as cross talk. Importantly, the first reflected portion of the first optical signal and the second reflected portion of the second optical signal may be different because the polarization state of the first optical signal and the second optical signal are different. Further, the target feedback portion of the first reflected signal (e.g., the portion of the first optical signal that reflects off the target) and the target feedback portion of the second reflected signal (e.g., the portion of the second optical signal that reflects off the target) are presumed to be the same. Thus, by comparing the first feedback signal (generated in response to the first reflected signal) and the second feedback signal (generated in response to the second reflected signal), the crosstalk signal may be identified, and the physical properties of the target determined. An example process for comparing the first feedback signal and the second feedback signal in order to mitigate crosstalk in the feedback signal is discussed in relation to FIG. 4 - FIG. 5.

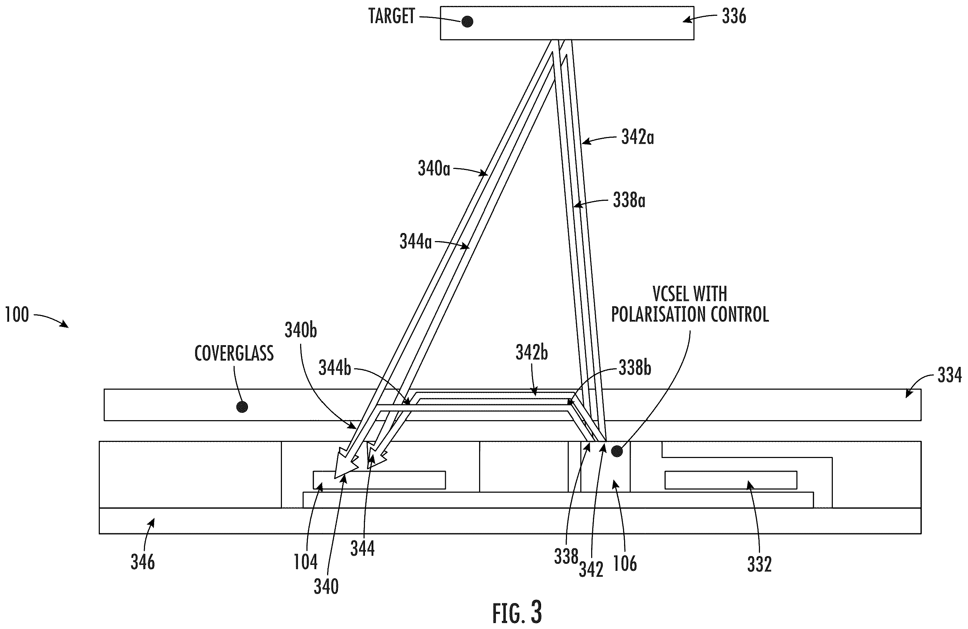

Referring now to FIG. 3, an example optical ranging sensor 100 is provided. As depicted in FIG. 3, the optical ranging sensor 100 comprises an optical transmitter 106 configured to direct ranging optical signals 338, 342 through a coverglass 334 placed in a transmission opening of the optical ranging sensor 100, toward a target object 336. The transmitted portion 338a, 342a of the optical signals 338, 342 are reflected by the target object 336 back through the coverglass 334 and a receiving opening in the optical ranging sensor, to be received at an optical receiver 104. Further, a portion of the optical signals 338, 342 are received by the reference array 332 of the optical ranging sensor 100.

As further depicted in FIG. 3, a portion of the optical signals 338, 342 (e.g., crosstalk portion 338b, 342b) are reflected by the coverglass 334 and transmitted to the optical receiver 104 as crosstalk. Thus, the reflected signals 340, 344 comprise both a target reflected portion 340a, 344a and a crosstalk reflected portion 340b, 344b.

As depicted in FIG. 3, the optical transmitter 106 is configurable to generate optical signals 338, 342 comprising different polarization states based on a polarization control signal (e.g., polarization control signal 112 in FIG. 1) generated by a controller (e.g., controller 108 in FIG. 1). In some embodiments, the optical transmitter 106 may comprise a vertical-cavity surface-emitting laser (VCSEL) configurable to transmit optical signals 338, 342 according to different polarization states. For example, the first optical signal 338 comprises a first polarization state and the second optical signal 342 comprises a second polarization state different from the first polarization state. The optical receiver 104 is configured to generate a first feedback signal based on the first reflected signal 340 received at the optical receiver 104 and is further configured to generate a second feedback signal based on the second reflected signal 344 received at the optical receiver 104.

As further depicted in FIG. 3, the optical transmitter 106 and the optical receiver 104 are electrically connected to a substrate 346 (e.g., printed circuit board). In addition, the housing cap of the optical ranging sensor 100 is attached to the substrate 346.

Referring now to FIG. 4, an example method 450 for removing a crosstalk signal from a feedback signal received at an optical ranging sensor 100 is provided.

As depicted in FIG. 4, an example first feedback signal 452 is represented as a crosstalk reflected portion 340b and a target reflected portion 340a. The example first feedback signal 452 is generated by the optical receiver 104 based on the first reflected signal (e.g., first reflected signal 340 as depicted in FIG. 3) received at the optical receiver 104, wherein the first reflected signal comprises a first polarization state. As depicted in FIG. 4, the first reflected signal comprises a crosstalk reflected portion 340b attributable to reflections from crosstalk sources and a target reflected portion 340a attributable to reflections from the target.

The example second feedback signal 454 is generated by the optical receiver 104 based on the second reflected signal (e.g., second reflected signal 344 as depicted in FIG. 3) received at the optical receiver 104, wherein the second reflected signal comprises a second polarization state. Although represented as a bin in a histogram, the principles of the process 450 may be applicable to any pair of feedback signals originating from optical signals transmitted with different polarization states. As depicted in FIG. 4, the second reflected signal comprises a crosstalk reflected portion 344b attributable to reflections from crosstalk sources and a target reflected portion 344a attributable to reflections from the target. As shown in FIG. 4, the crosstalk reflected portion 340b of the first feedback signal 452 is different from the crosstalk reflected portion 344b of the second feedback signal 454 because the first feedback signal 452 results from an optical signal having a first polarity state, and the second feedback signal 454 results from an optical signal having a second, different polarity state. However, as further shown in FIG. 3, the target reflected portion 340a of the first feedback signal 452 and the target reflected portion 344a of the second feedback signal 454 are the same. The process 450 of FIG. 4, exploits these properties to mitigate the contribution of crosstalk in the feedback signals 452, 454.

At operation 460 of the process 450, the first feedback signal 452 and the second feedback signal 454 are added together to generate a combined feedback signal 456. When performed on histogram bins, the operation 460 includes adding the value in the bin associated with the first feedback signal 452 with the corresponding bin in the second feedback signal 454. The resulting combined feedback signal 456 comprises a portion attributable to the combined target reflected portions 456a and a portion attributable to the combined crosstalk reflected portions 456b.

At operation 470 of the process 450, a difference between the first feedback signal 452 and the second feedback signal 454 is determined, resulting in the crosstalk difference signal 462. When performed on histogram bins, the operation 470 includes subtracting the value in the bin associated with the second feedback signal 454 from the corresponding bin in the first feedback signal 452. The resulting crosstalk difference signal 462 represents the difference in the first crosstalk reflected portion 340b and the second crosstalk reflected portion 344b. As shown in FIG. 4, the target reflected portions 340a, 344a are removed from the crosstalk difference signal 462 because the target reflected portions 340a, 344a are equivalent or nearly equivalent in the first feedback signal 452 and the second feedback signal 454.

At operation 480, a crosstalk function 463 is applied to the crosstalk difference signal 462. The crosstalk function 463 is any function, relation, algorithm, process, or other similar procedure that relates the difference in crosstalk (e.g., crosstalk difference signal 462) between two crosstalk reflected portions 340b, 344b resulting from optical signals having two different polarization states, to a total crosstalk signal 464 representing the combined crosstalk reflected portions 340b, 344b of the two feedback signals 452, 454. The crosstalk function 463 may be derived through a calibration process. For example, a relation function may be determined during a calibration process based on variations in coverglass, coverglass state, target, target distance. The crosstalk function 463 may then be used to derive the total crosstalk signal 464, from the crosstalk difference signal 462 during operation. When performed on histogram bins, the operation 480 includes plugging the value of the crosstalk difference signal 462 into a crosstalk function 463, configured to generate the total crosstalk signal 464 based on the crosstalk difference signal 462.

At operation 490 of the process 450, the total crosstalk signal 464 is removed from the combined feedback signal 456 to generate the target feedback signal 466. As shown in FIG. 4, the total crosstalk signal 464 determined based on a difference between the first feedback signal 452 and the second feedback signal 454, and application of the crosstalk function 463, is equivalent or nearly equivalent to the combined crosstalk reflected portion 456b of the combined feedback signal 456. Thus, by determining the difference between the combined feedback signal 456 and the total crosstalk signal 464, only the target reflected portions 456a of the combined feedback signal 456 remains. The target feedback signal 466, thus represents only the portion, or a multiple of the portion, of the first feedback signal 452 and the second feedback signal 454 attributable to reflections from the target object. The target feedback signal 466 may therefore be utilized to accurately determine one or more physical characteristics of the target, for example, the distance of the target object, the motion of the target object, the speed of the target object, surface properties of the target object, and so on. When performed on histogram bins, the operation 490 includes subtracting the value of the total crosstalk signal 464 from the value of the combined feedback signal 456 at a corresponding bin.

Although depicted at one histogram bin, the operations (e.g., operations 460, 470, 480, 490) described with reference to process 450 may be executed for each histogram bin in a plurality of histogram bins.

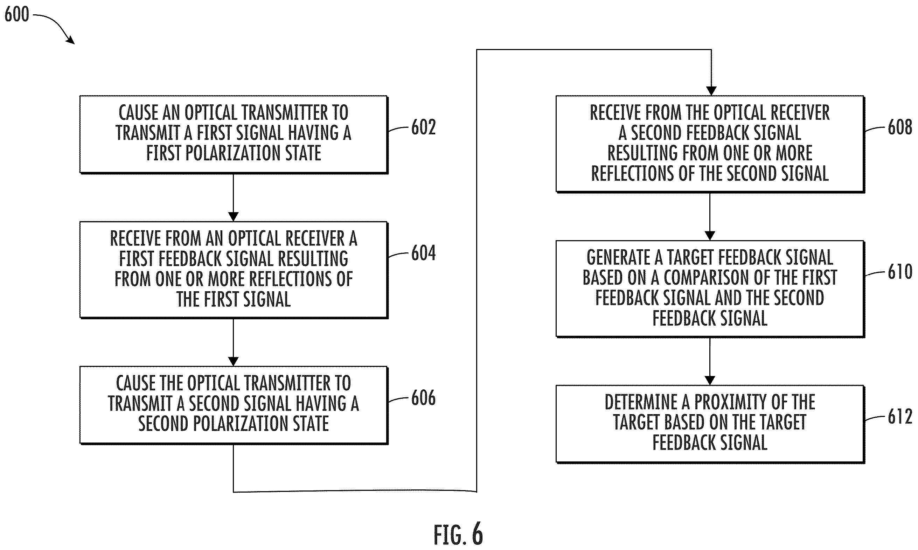

Referring now to FIG. 6, an example method 600 for removing a crosstalk signal (e.g., crosstalk portion 338b, 342b) from a feedback signal (e.g., feedback signal 452, 454) is provided. At block 602, the controller (e.g., controller 108) of an optical ranging sensor (e.g., optical ranging sensor 100) causes an optical transmitter (e.g., optical transmitter 106) to transmit a first signal (e.g., optical signal 338) having a first polarization state. As described herein, the optical transmitter may be configured to generate optical signals having different polarizations based on a polarization control signal (e.g., polarization control signal 112). For example, the optical transmitter may comprise a VCSEL with polarization control, in which a portion of the light output apertures comprise a horizontal grating and a portion of the light output apertures comprise a vertical grating. The controller may transmit a polarization control signal to the optical transmitter configuring the optical transmitter to transmit an optical signal exhibiting a first polarization state.

At block 604, the controller receives from an optical receiver (e.g., optical receiver 104) a first feedback signal (e.g., first feedback signal 452) resulting from one or more reflections of the first signal. The optical receiver receives a plurality of reflections resulting from the transmitted first optical signal. The reflections may originate from a target object in an external environment. In addition, reflections may originate from crosstalk sources, such as a coverglass (e.g., coverglass 334) for the optical ranging sensor. The optical receiver is configured to generate the first feedback signal based on the reflections received. Because the first feedback signal results from reflections from both the target and crosstalk sources, the first feedback signal includes a crosstalk reflected portion (e.g., crosstalk reflected portion 340b) and a target reflected portion (e.g., target reflected portion 340a). In some embodiments, the first feedback signal may comprise a portion (e.g., bin) of a feedback signal histogram (e.g., feedback signal histogram 596) based on accumulated light resulting from one or more reflections of the first optical signal over an integration period. Each bin of the feedback signal histogram similarly comprises a crosstalk reflected portion and a target reflected portion.

At block 606, the controller causes the optical transmitter to transmit a second signal (e.g., optical signal 342) having a second polarization state. As described herein, the controller may transmit a polarization control signal to the optical transmitter configuring the optical transmitter to transmit an optical signal exhibiting a second polarization state, different from the first polarization state. In some embodiments, the second polarization state may be orthogonal to the first polarization state. In some embodiments, the controller may reconfigure the optical transmitter after each integration period to alternate transmitting optical signals of the first polarization state and the second polarization state.

At block 608, the controller receives from the optical receiver a second feedback signal (e.g., second feedback signal 454) resulting from one or more reflections of the second signal. The optical receiver receives a plurality of reflections resulting from the transmitted second optical signal. The reflections may originate from a target object in an external environment. In addition, reflections may originate from crosstalk sources, such as a coverglass for the optical ranging sensor. The optical receiver is configured to generate the second feedback signal based on the reflections received. Because the second feedback signal results from reflections from both the target and crosstalk sources, the second feedback signal includes a crosstalk reflected portion (e.g., crosstalk reflected portion 344b) and a target reflected portion (e.g., target reflected portion 344a). Further, because the second feedback signal is based on the second optical signal having a polarization state different than the polarization state of the first optical signal, the magnitude of the reflection of the second optical signal at various transmissive components may be different that the first optical signal. As a result, the target reflected portion of the second feedback signal is equivalent or nearly equivalent to the target reflected portion of the first feedback signal. However, the crosstalk reflected portion of the second feedback signal may be different from the crosstalk reflected portion of the first feedback signal.

In some embodiments, the second feedback signal may comprise a portion (e.g., bin) of a feedback signal histogram based on accumulated light resulting from one or more reflections of the second optical signal over an integration period. Each bin of the feedback signal histogram similarly comprises a crosstalk reflected portion and a target reflected portion.

At block 610, the controller generates a target feedback signal (e.g., target feedback signal 466) based on a comparison of the first feedback signal and the second feedback signal. As further described in relation to FIG. 4, in some embodiments, the controller may combine (or add) the first feedback signal and the second feedback signal to determine a combined feedback signal (e.g., combined feedback signal 456). In addition, the controller may determine a difference (subtract) between the first feedback signal and the second feedback signal to determine a crosstalk difference signal (e.g., crosstalk difference signal 462). Since the target reflected portion of the second feedback signal and the target reflected portion of the first feedback signal are nearly equivalent, the target reflected portion of the signals is canceled out and only the difference between the crosstalk reflected portions remains in the crosstalk difference signal.

Further, a crosstalk function (e.g., crosstalk function 463) is applied to the crosstalk difference signal to determine a total crosstalk signal (e.g., total crosstalk signal 464). The crosstalk function correlates a difference in crosstalk reflected portions between polarity states into the total crosstalk signal. The crosstalk function may be determined during a calibration period, for example, by mapping a plurality of crosstalk differences to total crosstalk values. The total crosstalk signal represents the crosstalk portion of the combined feedback signal.

To determine the target feedback signal (e.g., target feedback signal 466), a value equal to the total crosstalk signal is removed from the combined feedback signal. By removing the signal attributable to the total crosstalk signal from the combined feedback signal, only the target feedback signal remains. The target feedback signal represents a multiple of the target reflected portion of the first feedback signal and the second feedback signal.

At block 612, the controller determines a proximity of the target based on the target feedback signal. The target feedback signal may be used to determine a physical characteristic related to the proximity of the target object, for example, the distance of the target object, the motion of the target object, the speed of the target object, surface properties of the target object, presence of a target object, and so on.

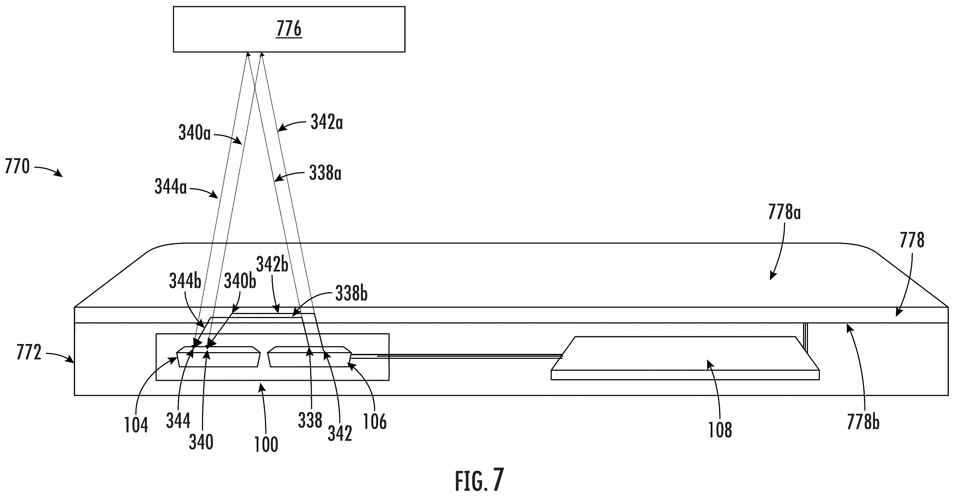

Referring now to FIG. 7, an example mobile electronic device 770 comprising an optical ranging sensor 100 is provided. As depicted in FIG. 7, the example mobile electronic device 770 includes a housing 772 and a display screen 778 defining an enclosed area in which the optical ranging sensor 100 and a controller 108 are disposed. The controller 108 is electrically coupled to the optical ranging sensor 100 to receive at least first and second feedback signals (e.g., first feedback signal 110, second feedback signal 111) and generate polarization control signals (e.g., polarization control signal 112).

As further depicted in FIG. 7, the example mobile electronic device 770 includes a housing 772. The housing 772 may be any structure, packaging, case, or similar mechanism designed to provide a protective enclosure for the internal components of the mobile electronic device 770, for example, including the optical ranging sensor 100. In some embodiments, the housing 772 together with the display screen 778 define an enclosed area.

As further depicted in FIG. 7, the display screen 778 comprises a first side 778a configured to emit transmitted light via a plurality of display pixels into the external environment and a second side 778b opposite the first side 778a. In some embodiments, the display screen 778 may further comprise a coverglass (e.g., coverglass 334) configured to protect the display screen 778 and/or underlying electronic components (e.g., optical ranging sensor 100).

As further depicted in FIG. 7, the mobile electronic device 770 includes an optical ranging sensor 100 for purposes of detecting proximity characteristics of a target object 776. As shown in FIG. 7, a portion of the optical signals 338, 342 (e.g., crosstalk portion 338b, 342b) are reflected by the coverglass 334 and transmitted to the optical receiver 104 as crosstalk. To compensate for the crosstalk reflected portion (e.g., crosstalk reflected portion 340b, 344b) of the reflected signal 340, 344, the optical transmitter 106 is configured to generate optical signals 338, 342 having different polarity states. The difference in polarity states may result in a difference in the magnitude of the crosstalk reflected portions 340b, 344b. Utilizing such a difference, the optical ranging sensor 100 may mitigate the crosstalk reflected portions of the reflected signal 340, 344 before determining the proximity characteristics of the target object 776. Leveraging a plurality of polarity states in determining the proximity characteristics of a target object 776 by an optical ranging sensor 100 enables dynamic adjustment of crosstalk mitigation in the presence of changing conditions with the mobile electronic device 770 (e.g., smudges, fingerprints, dirt, on the coverglass 334).

In some non-limiting examples, the mobile electronic device 770 may comprise a mobile phone, laptop, television, monitor, computer, wearable electronic device, or other mobile device.

Referring now to FIG. 8, FIG. 8 illustrates an example controller 108 in accordance with at least some example embodiments of the present disclosure. The controller 108 includes processor 802, input/output circuitry 804, data storage media 806, and communications circuitry 808. In some embodiments, the controller 108 is configured, using one or more of the sets of circuitry 802, 804, 806, and/or 808, to execute and perform the operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processor(s), network interface(s), storage medium(s), and/or the like, to perform their associated functions, such that duplicate hardware is not required for each set of circuitry. The user of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Alternatively, or additionally, in some embodiments, other elements of the controller 108 provide or supplement the functionality of other particular sets of circuitry. For example, the processor 802 in some embodiments provides processing functionality to any of the sets of circuitry, the data storage media 806 provides storage functionality to any of the sets of circuitry, the communications circuitry 808 provides network interface functionality to any of the sets of circuitry, and/or the like.

In some embodiments, the processor 802 (and/or co-processor or any other processing circuitry assisting or otherwise associated with the processor) is/are in communication with the data storage media 806 via a bus for passing information among components of the controller 108. In some embodiments, for example, the data storage media 806 is non-transitory and may include, for example, one or more volatile and/or non-volatile memories. In other words, for example, the data storage media 806 in some embodiments includes or embodies an electronic storage device (e.g., a computer readable storage medium). In some embodiments, the data storage media 806 is configured to store information, data, content, applications, instructions, or the like, for enabling the controller 108 to carry out various functions in accordance with example embodiments of the present disclosure.

The processor 802 may be embodied in a number of different ways. For example, in some example embodiments, the processor 802 includes one or more processing devices configured to perform independently. Additionally, or alternatively, in some embodiments, the processor 802 includes one or more processor(s) configured in tandem via a bus to enable independent execution of instructions, pipelining, and/or multithreading. The use of the terms "processor" and "processing circuitry" should be understood to include a single core processor, a multi-core processor, multiple processors internal to the controller 108, and/or one or more remote or "cloud" processor(s) external to the controller 108.

In an example embodiment, the processor 802 is configured to execute instructions stored in the data storage media 806 or otherwise accessible to the processor. Alternatively, or additionally, the processor 802 in some embodiments is configured to execute hard-coded functionality. As such, whether configured by hardware or software methods, or by a combination thereof, the processor 802 represents an entity (e.g., physically embodied in circuitry) capable of performing operations according to an embodiment of the present disclosure while configured accordingly. Alternatively, or additionally, as another example in some example embodiments, when the processor 802 is embodied as an executor of software instructions, the instructions specifically configure the processor 802 to perform the algorithms embodied in the specific operations described herein when such instructions are executed.

In some embodiments, the controller 108 includes input/output circuitry 804 that provides output to the user and, in some embodiments, to receive an indication of a user input. In some embodiments, the input/output circuitry 804 is in communication with the processor 802 to provide such functionality. The input/output circuitry 804 may comprise one or more user interface(s) (e.g., user interface) and in some embodiments includes a display that comprises the interface(s) rendered as a web user interface, an application user interface, a user device, a backend system, or the like. The processor 802 and/or input/output circuitry 804 comprising the processor may be configured to control one or more functions of one or more user interface elements through computer program instructions (e.g., software and/or firmware) stored on a memory accessible to the processor (e.g., data storage media 806, and/or the like). In some embodiments, the input/output circuitry 804 includes or utilizes a user-facing application to provide input/output functionality to a client device and/or other display associated with a user.

In some embodiments, the controller 108 includes communications circuitry 808. The communications circuitry 808 includes any means such as a device or circuitry embodied in either hardware or a combination of hardware and software that is configured to receive and/or transmit data from/to a network and/or any other device, circuitry, or module in communication with the controller 108. In this regard, the communications circuitry 808 includes, for example in some embodiments, a network interface for enabling communications with a wired or wireless communications network. Additionally, or alternatively in some embodiments, the communications circuitry 808 includes one or more network interface card(s), antenna(s), bus(es), switch(es), router(s), modem(s), and supporting hardware, firmware, and/or software, or any other device suitable for enabling communications via one or more communications network(s). Additionally, or alternatively, the communications circuitry 808 includes circuitry for interacting with the antenna(s) and/or other hardware or software to cause transmission of signals via the antenna(s) or to handle receipt of signals received via the antenna(s). In some embodiments, the communications circuitry 808 enables transmission to and/or receipt of data from a client device in communication with the controller 108.

Additionally, or alternatively, in some embodiments, one or more of the sets of circuitry 802-914 are combinable. Additionally, or alternatively, in some embodiments, one or more of the sets of circuitry perform some or all of the functionality described associated with another component. For example, in some embodiments, one or more sets of circuitry 802-808 are combined into a single module embodied in hardware, software, firmware, and/or a combination thereof. Similarly, in some embodiments, one or more of the sets of circuitry is/are combined such that the processor 802 performs one or more of the operations described above with respect to each of these circuitry individually.

While this detailed description has set forth some embodiments of the present invention, the appended claims cover other embodiments of the present invention which differ from the described embodiments according to various modifications and improvements. For example, one skilled in the art may recognize that such principles may be applied to any sensing device configured to transmit and receive optical signals through an environment susceptible to crosstalk. For example, light detection and ranging (LIDAR) systems, ultrasonic sensors, structured light sensors, and so on.

Within the appended claims, unless the specific term "means for" or "step for" is used within a given claim, it is not intended that the claim be interpreted under 35 U.S.C. 112, paragraph 6.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. An optical ranging sensor comprising:
an optical transmitter configured to generate at least one signal having a polarization state;
an optical receiver configured to generate:
at least one feedback signal resulting from one or more reflections of said signal having a polarization state; and
a controller configured to:
generate a target feedback signal based at least on said feedback signal; and
determine a proximity of a target based on the target feedback signal.

2. A method for determining a proximity of a target at an optical ranging sensor, the method comprising:
causing an optical transmitter to transmit at least one signal having a polarization state;
receiving from an optical receiver at least one feedback signal resulting from one or more reflections of said signal having a polarization state;
generating a target feedback signal based at least on said feedback signal; and
determining the proximity of the target based on the target feedback signal.

3. A mobile electronic device comprising:
a housing;
a display screen attached to the housing, the display screen comprising:
a first side configured to emit transmitted light via a plurality of display pixels into an external environment; and
an optical ranging sensor according to claim 1 or adapted to implement the method of claim 2, disposed within the housing, opposite the first side of the display screen.

4. The sensor of claim 1, or the method of claim 2, or the device of claim 3, wherein:
said one signal having a polarization state is a first signal having a first polarization state of a plurality of signals;
the optical transmitter generates and/or transmits a second signal having a second polarization state.

5. The sensor of claim 1 or 4, or the method of claim 2 or 4, or the device of claim 3 or 4, wherein:
said one feedback signal is a first feedback signal of a plurality of feedback signals;
said target feedback signal is generated based on a comparison of the first feedback signal and the second feedback signal.

6. The sensor of claim 1, or the method of claim 2, or the device of claim 3, or the sensor, method or device of claim 4 and 5, wherein the target feedback signal corresponds to a portion of said one signal having a polarization state or said first signal having a first polarization state reflected off the target.

7. The sensor or device of claim 6 in its dependency on claims 4 and 5, wherein to generate the target feedback signal, the controller is further configured for, or the method of claim 6 in its dependency on claims 4 and 5, wherein generating the target feedback signal further comprises:
generating a first histogram corresponding to the first feedback signal;
generating a second histogram corresponding to the second feedback signal; and
generating the target feedback signal based on a comparison of the first histogram and the second histogram.

8. The sensor of at least one of the former sensor claims in their dependency on claim 5, or the device of at least one of the former device claims in their dependency on claim 5, wherein to generate the target feedback signal, the controller is further configured for, or the method of at least one of the former method claims in their dependency on claim 5, wherein generating the target feedback signal further comprises:
determining a crosstalk difference signal by performing a difference between the first feedback signal and the second feedback signal; and
applying a crosstalk function to determine a total crosstalk signal, wherein the crosstalk function relates the crosstalk difference to the total crosstalk signal.

9. The sensor or method or device of claim 8, wherein the crosstalk function is determined during a calibration period.

10. The sensor of at least one of the former sensor claims, or the method of at least one of the former method claims, or the device of at least one of the former device claims, wherein the proximity of the target is based on a time-of-flight associated with the target feedback signal.

11. The sensor of at least one of the former sensor claims, or the method of at least one of the former method claims, or the device of at least one of the former device claims, in their dependency on claim 4, wherein the first polarization state is orthogonal to the second polarization state.

12. The sensor of at least one of the former sensor claims, or the method of at least one of the former method claims, or the device of at least one of the former device claims, in their dependency on claim 4, wherein the optical transmitter is configured to alternate between generating the first signal having the first polarization state and the second signal having the second polarization state.

13. The sensor or the method or the device of claim 12, wherein the optical transmitter alternates between generating the first signal having the first polarization state and the second signal having the second polarization state after each integration period.

14. The sensor or the method or the device of claim 13, wherein the optical transmitter is a vertical-cavity surface-emitting laser.

15. The sensor or the method or the device of claim 14, wherein the vertical-cavity surface-emitting laser is configured to generate the first signal having the first polarization state and the second signal having the second polarization state based on a polarization control signal transmitted by the controller.
